# FASCICULE DE BREVET EUROPEEN

(11) **EP 2 648 912 B1**
(45) Date de publication et mention de la délivrance du brevet: **21.10.2015**
(21) Numéro de dépôt: 11810585.7
(22) Date de dépôt: 06.12.2011
(51) Int. Cl.: B32B 7/02, B32B 29/00, B32B 33/00, B42D 15/00, G02B 5/18, G02B 5/02, G07D 7/00

(54) **PRODUIT SECURISE ET METHODE DE FABRICATION DUDIT PRODUIT SECURISE**
SICHERES PRODUKT UND VERFAHREN ZUR HERSTELLUNG DIESES SICHEREN PRODUKTS
SECURE PRODUCT AND METHOD OF PRODUCING SAID SECURE PRODUCT

(30) Priorité: 07.12.2010 FR 1060190
(43) Date de publication de la demande: 16.10.2013
(73) Titulaire: Hologram.Industries, 77600 Bussy St Georges (FR)
(72) Inventeur: PETITON, Valéry, F-77440 Vendrest (FR); DANIEL, Françoise, F-77420 Champs Sur Marne (FR)
(74) Mandataire: Osha Liang
(86) Numéro de dépôt international: PCT/EP2011/071963
(87) Numéro de publication internationale: WO 2012/076547

(56) Documents cités:
- EP-A2- 1 897 700
- WO-A1-02/084343
- WO-A1-2006/007742
- CH-A5- 680 170
- US-A1- 2007 195 387
- US-A1- 2010 045 024

## Description

### DOMAINE DE L'INVENTION

L'invention est relative à des produits sécurisés et à leurs méthodes de fabrication, comme par exemple à des documents de sécurité comprenant une pluralité de couches.

### DESCRIPTION DE L'ART ANTÉRIEUR

Pour se prémunir de contrefaçons ou de falsifications de produits sécurisés, par exemple des documents de sécurité, et afin d'augmenter le niveau de sécurisation de ces produits, il est connu d'y incorporer des éléments de sécurité particuliers.

Dans le cas des documents de sécurité, des normes internationales, telles que la norme ISO7810, définissent des formats à respecter. On notera notamment ISO7810 ID-1 pour les cartes d'identité ou bancaires et ISO7810 ID-3 pour les passeports.

Généralement, ces documents de sécurité sont réalisés en deux temps : tout d'abord des données variables, telles que les données personnelles du porteur, sont imprimées sur le support du document de sécurité, comprenant généralement du papier, puis ces données sont protégées et sécurisées par transfert de différentes couches protectrices. L'association des couches protectrices et du support du produit sécurisé est réalisée, selon l'art antérieur, par laminage thermique ou pressage à chaud du produit sécurisé de manière à thermocoller les couches protectrices sur le support du produit sécurisé grâce à, par exemple, une colle réactivable à chaud.

Ces données variables peuvent inclure des informations destinées à être lues, ou informations lisibles, qui apparaissent généralement comme texte dans une zone d'inspection visuelle et dans une zone lisible par machine. Cette zone lisible par machine, dite zone MRZ (« machine readable zone »), est prévue par les normes ICAO 9303 et est dédiée à la lecture optique de données par des machines qui procèdent tout d'abord à l'acquisition d'une image de la zone MRZ d'un document de sécurité, puis à l'analyse des données inscrites dans la zone MRZ. Des lecteurs ont été développés à cet effet et sont utilisés notamment aux postes frontières.

Dans lesdits produits sécurisés, les éléments de sécurité couramment employés sont des éléments de sécurité optiques. Ces éléments de sécurité optiques sont généralement des éléments optiquement variables, tels que des structures diffractives incluant les hologrammes. Ces éléments optiquement variables se présentent généralement sous forme de laminats qui comprennent une couche réfléchissante au moins partiellement transparente et une couche comprenant une microstructure diffractante et qui sont disposés de manière à recouvrir les données variables contenues dans des produits à sécuriser afin de protéger ces produits notamment contre la falsification de leurs données. La liaison forte entre le laminat et le support empêche le décollement du laminat de sécurité de manière à interdire de réutiliser le laminat sur un faux document ou de modifier les mentions inscrites sous le laminat de sécurité. Ces laminats ont une double fonction, celle de protection du document de sécurité contre la salissure et les rayures et celle de protection du document de sécurité contre la falsification.

Les éléments de sécurité optiques doivent être suffisamment complexes pour empêcher un contrefacteur de reproduire ou de simuler l'élément de sécurité optique. Pour que la sécurité optique soit efficace, les produits sécurisés selon l'art antérieur ont été conçus en recherchant d'une part la complexité et l'originalité des microstructures, et d'autre part à ce que l'effet optique soit le plus intense possible.

Cependant, la couche réfléchissante, qui est nécessaire à la visibilité des éléments optiquement variables et recouvre la totalité de la surface protégée, se conduit comme un réflecteur ayant une réflexion spéculaire qui éblouie en réflexion directe et nuit fortement à la lecture des données variables soit par une machine soit à l'oeil nu par un opérateur. Plus le laminat est efficace en terme de protection du document de sécurité, c'est à dire plus le laminat a un haut pouvoir de réflexion dans les zones comprenant des éléments optiquement variables, plus la lecture par la machine est difficile.

### DESCRIPTION

Le document US 2010/0045024 décrit un élement de sécurité comprenant un motif graphique et une couche au moins en partie opaque.

Un objet de la présente invention est celui de fournir des produits sécurisés, comprenant au moins une première couche réfléchissante transparente, une deuxième couche transparente et une troisième couche incluant des informations lisibles, permettant d'améliorer la lecture optique d'informations contenues dans des zones de lecture de ces produits sécurisés et lisibles par des machines ou à l'oeil nu sans réduire la résistance à la contrefaçon et à la falsification des produits sécurisés et sans augmenter leur coût. Dans cette perspective, le Demandeur a avantageusement trouvé que l'addition d'une microstructure diffusante sur au moins une première partie de la face interne de la deuxième couche du produit sécurisé permet de remplir cet objet.

Dans la présente description et dans les revendications qui suivent, les termes "informations lisibles" sont utilisés en référence à des informations contenues dans le produit sécurisé destinées à être lues à l'oeil nu ou par une machine afin d'identifier et/ou d'authentifier le produit sécurisé. Ces informations lisibles peuvent être des données apparaissant sous forme de texte contenant par exemple les données biographiques du titulaire du produit, des données apparaissant sous forme de symbole ou de chiffre ou sous toute autre forme permettant d'identifier et/ou d'authentifier le produit sécurisé.

Dans la présente description et dans les revendications qui suivent, les termes "zone de lecture" sont utilisés en référence à une zone dans laquelle sont situées des informations lisibles contenues dans le produit sécurisé. Chaque zone de lecture est dédiée soit à la lecture à l'oeil nu, soit à la lecture par une machine, soit à la fois à la lecture à l'oeil nu et par une machine.

Dans la présente description et dans les revendications qui suivent, le terme "réfléchissant" est utilisé en référence à la réflexion de la lumière au moins partiellement dans le domaine du visible. Ainsi, par exemple, une couche réfléchissante est une couche pouvant réfléchir la lumière au moins partiellement dans le domaine du visible.

Dans la présente description et dans les revendications qui suivent, le terme "transparent" est utilisé en référence au passage au moins partiel de la lumière dans le domaine du visible au travers d'un milieu. Ainsi, par exemple, une couche transparente est une couche pouvant laisser passer au moins partiellement la lumière dans le domaine du visible.

Dans la présente description et dans les revendications qui suivent, les termes "face interne" sont utilisés en référence à la face d'une couche ou d'un autre élément du produit sécurisé ou du produit multicouche selon l'invention qui est en contact avec une autre couche ou un autre élément du produit.

Dans la présente description et dans les revendications qui suivent, les termes "face externe" sont utilisés en référence à la face d'une couche ou d'un autre élément du produit sécurisé ou du produit multicouche selon l'invention qui n'est pas en contact avec une autre couche ou un autre élément du produit.

Selon un premier aspect de la présente invention, ledit objet est rempli par un produit sécurisé comprenant une première couche réfléchissante, une deuxième couche et une troisième couche incluant des informations lisibles, la première couche étant enfermée entre la deuxième et la troisième couches, dans lequel la première et la deuxième couches sont transparentes, au moins une première partie de la face interne de la deuxième couche comprend une microstructure diffusante et la microstructure diffusante est positionnée de manière à couvrir une partie prédéterminée des informations lisibles.

Le fait d'ajouter une microstructure diffusante sur une partie de la face interne de la deuxième couche du produit sécurisé permet d'améliorer la lisibilité à l'oeil nu ou par une machine des informations lisibles contenues dans la troisième couche du produit sécurisé.

De manière avantageuse, les informations lisibles contenues dans un produit sécurisé, qui peuvent se trouver dans une ou plusieurs zones de lecture du produit sécurisé, sont lisibles à l'oeil nu ou par une machine de manière améliorée, en réduisant notamment le phénomène d'éblouissement en réflexion directe.

De préférence, la microstructure diffusante est positionnée de manière à couvrir la totalité des informations lisibles. Dans un mode de réalisation préféré, la microstructure diffusante est positionnée de manière à couvrir les informations lisibles contenues dans la zone lisible par machine ou zone MRZ du produit sécurisé.

Dans un mode de réalisation préféré, la microstructure diffusante est de forme, taille et/ou positionnement dans le produit sécurisé tels qu'elle permet, lors de l'utilisation, une lisibilité encore améliorée des informations lisibles contenues dans le produit sécurisé.

Dans un mode de réalisation préféré, la surface de la microstructure diffusante couvre 100% de la deuxième couche. Dans un mode de réalisation préféré, la surface de la microstructure diffusante est comprise entre 1 et 90%, de préférence entre 10 et 70% et encore de préférence entre 15 à 20% de la surface totale de la deuxième couche.

Dans un mode de réalisation préféré de la présente invention, la microstructure diffusante comprend un microrelief. Dans un mode de réalisation préféré, la microstructure diffusante comprend une pluralité de pics et/ou de vallées positionnés de manière aléatoire. Dans un mode de réalisation préféré, la hauteur des pics et la profondeur des vallées sont chacune sensiblement inférieures à 1µm, de préférence comprises entre 50 et 200 nm, et de préférence comprises entre 100 et 160 nm. Encore plus particulièrement, la hauteur des pics et la profondeur des vallées sont d'environ 130 nm. Dans un mode de réalisation préféré, la hauteur des pics et la profondeur des vallées sont encore dans ces plages de valeurs, mais distinctes l'une de l'autre. Le caractère dispersif de la microstructure diffusante, est dépendant de la densité et de la taille des pics et des vallées, qui peuvent être fixées par l'homme du métier selon le produit souhaité.

Dans un mode de réalisation préféré, la microstructure diffusante crée un gradient d'indice de réfraction à l'interface des première et deuxième couches. La modification de la topographie de la surface de la deuxième couche, due à l'ajout d'une microstructure diffusante sur la face interne de ladite deuxième couche, permet de créer une surface anti-réflective en créant un gradient d'indice de réfraction à l'interface des première et deuxième couches. Le gradient d'indice de réfraction dans les zones où l'on veut préserver une bonne qualité de lecture à l'oeil nu et par des machines des informations lisibles est tel que la lumière n'est plus réfléchie mais dispersée dans les couches sous-jacentes puis absorbée par la troisième couche.

Selon un mode de réalisation préféré, la réflexion spéculaire dans la partie de la deuxième couche comprenant la microstructure diffusante est réduite entre 20% et 80%, et de préférence de 50% par rapport au reste de la deuxième couche lorsque la première partie de la deuxième couche comprenant la microstructure diffusante ne couvre pas la totalité de la face interne de la deuxième couche ou par rapport à une couche identique à la deuxième couche mais ne comprenant pas la microstructure diffusante lorsque la première partie de la deuxième couche comprenant la microstructure diffusante couvre la totalité de la face interne de la deuxième couche.

La réflexion spéculaire à la surface de la deuxième couche du produit sécurisé, c'est-à-dire la quantité de lumière pour laquelle un rayon incident donne naissance à un rayon réfléchi unique, peut être mesurée par une quelconque technique adaptée connue de l'homme du métier, et par exemple par une mesure relative acquise grâce à un brillancemètre Novo-Curve de Rhopoint Instruments. L'appareil est positionné de manière à transmettre un rayon de lumière à un angle prédéterminé sur une partie du produit sécurisé que l'on veut évaluer et à mesurer la quantité de lumière réfléchie par le produit sécurisé. Par exemple, pour un angle de 60°, la réflexion spéculaire est inférieure à 100.

Afin de comparer différentes parties du produit sécurisé, l'appareil est tout d'abord positionné de manière à transmettre un rayon de lumière à un angle prédéterminé sur une partie du produit sécurisé ayant un aspect réfléchissant maximal et à mesurer une première valeur Gloss1. Ensuite l'appareil est positionné de manière à transmettre un rayon de lumière au même angle prédéterminé sur une deuxième partie du produit sécurisé ayant une microstructure diffusante et à mesurer une deuxième valeur Gloss2. Le rapport Gloss2/Gloss1 permet d'évaluer la différence de réflexion spéculaire entre ces deux parties du produit sécurisé. Dans un mode de réalisation préféré, pour un angle prédéterminé de 60°, le rapport Gloss2/Glossl ainsi déterminé est inférieur à 80% et de préférence inférieur à 50%.

Dans un mode de réalisation préféré, la première partie de la face interne de la deuxième couche comprend au moins deux microstructures diffusantes ayant chacune un caractère dispersif différent. Avantageusement, la présence de plusieurs microstructures diffusantes ayant un caractère dispersif différent permet de créer, à la surface du produit sécurisé, une marque distinctive, telle qu'un logo, détectable à l'oeil nu et/ou à la machine.

Dans un mode de réalisation, la première partie de la face interne de la deuxième couche comprend au moins deux microstructures diffusantes ayant chacune un microrelief différent. Selon un mode de réalisation, la première partie de la face interne de la deuxième couche comprend une première microstructure diffusante ayant un premier microrelief et une deuxième microstructure diffusante ayant un deuxième microrelief, le deuxième microrelief étant différent du premier microrelief.

Selon un mode de réalisation, la première partie de la face interne de la deuxième couche comprend une première microstructure diffusante ayant un premier caractère dispersif et une deuxième microstructure diffusante ayant un deuxième caractère dispersif, le deuxième caractère dispersif étant différent de 10 à 60% par rapport au premier caractère dispersif, de préférence de 30 à 50% par rapport au premier caractère dispersif.

Afin de comparer ces deux microstructures diffusantes, le brillancemètre Novo-Curve de Rhopoint Instruments, après avoir mesuré la valeur Gloss2 en référence à une première microstructure diffusante comme défini ci-dessus, est en outre positionné de manière à transmettre un rayon de lumière au même angle prédéterminé sur une partie du produit sécurisé comprenant une deuxième microstructure diffusante, cette deuxième microstructure diffusante ayant un caractère dispersif différent par rapport à la première microstructure diffusante et à mesurer une troisième valeur Gloss3. Le rapport Gloss2/Gloss3 permet d'évaluer la différence de réflexion spéculaire entre les deux microstructures diffusantes. Dans un mode de réalisation préféré où la deuxième microstructure diffusante a un caractère dispersif inférieur à celui de la première microstructure diffusante, pour un angle prédéterminé de 60°, le rapport Gloss2/Gloss3 ainsi déterminé est compris entre 10 et 50%, de préférence entre 10 et 30%, et est de préférence de 15%.

Dans un mode de réalisation préféré, la première couche a une épaisseur moyenne comprise entre 5 et 500 nm, de préférence entre 5 et 250 nm et de préférence entre 10 et 50 nm. Dans un mode de réalisation préféré, la deuxième couche a une épaisseur moyenne inférieure ou égale à 10 µm, et de préférence comprise entre 2 et 10 µm. Dans un mode de réalisation préféré, la troisième couche a une épaisseur moyenne comprise entre 50 et 500 µm, et de préférence entre 80 et 120 µm.

Selon un mode de réalisation préféré, la première couche comprend au moins un composant ayant un fort indice de réfraction, par exemple supérieur à 2. Dans un mode de réalisation préféré, la première couche comprend au moins un composant choisi parmi le sulfure de zinc, le dioxyde de titane, ou l'oxyde de zirconium.

Selon un mode de réalisation préféré, la deuxième couche comprend un vernis thermoformable. Dans un autre mode de réalisation préféré, la deuxième couche comprend au moins un vernis acrylique.

Dans un mode de réalisation préféré, la troisième couche du produit sécurisé comprend au moins un composant choisi parmi le polycarbonate, le plexiglas, le polyéthylène, le polypropylène, le polyéthylène téréphtalate, le polychlorure de vinyle, le polyester, le papier ou des mélanges de ceux-ci. Dans un mode de réalisation préféré, la troisième couche du produit sécurisé comprend du papier.

Dans un mode de réalisation préféré, le produit sécurisé peut comprendre en outre une couche adhésive entre les première et troisième couches.

La couche adhésive permet de souder les première et troisième couches entre elles. Dans un mode de réalisation préféré, la couche adhésive comprend un adhésif thermoréactivable. Dans un mode de réalisation préféré, la couche adhésive comprend des polymères ayant un point de fusion compris entre 80°C et 150°C, de préférence un adhésif à base de copolymère polyuréthane acrylique en dispersion aqueuse. Dans un mode de réalisation préféré, la couche adhésive a une épaisseur comprise entre 2 et 25 µm, de préférence entre 5 et 10 µm.

Selon un mode de réalisation préféré, la couche adhésive comprend un matériau thermoréactivable.

Dans un autre mode de réalisation préféré, le produit sécurisé peut comprendre en outre une couche de protection sur la face externe de la deuxième couche.

La couche de protection permet de protéger le produit sécurisé contre au moins l'un de la salissure, des rayures, des attaques chimiques et de la falsification: Dans un mode de réalisation préféré, la couche de protection comprend un vernis acrylique. Dans un mode de réalisation préféré, la couche de protection comprend l'un au moins du chlorure de polyvinylidène, du fluorure de polyvinylidène ou d'un copolymère acrylique ou de vinyle. Dans un mode de réalisation préféré, la couche de protection a une épaisseur comprise entre 1 et 10 µm, de préférence entre 1,5 er 5 µm, et de préférence entre 1,5 et 2 µm.

Dans un mode de réalisation préféré, une deuxième partie de la face interne de la deuxième couche comprend au moins une microstructure diffractante. Selon un mode de réalisation particulier, la réflexion spéculaire dans la première partie de la deuxième couche comprenant la microstructure diffusante est réduite de entre 20 et 90%, de préférence entre 40 et 60%, de préférence entre 45 et 55% et de préférence de 50% par rapport à la partie de la deuxième couche comprenant la microstructure diffractante.

Dans un mode de réalisation préféré, la microstructure diffractante comprend un microrelief. Dans un mode de réalisation préféré, la microstructure diffractante comprend une pluralité de pics et/ou de vallées positionnés de manière au moins partiellement régulière. Dans un mode de réalisation préféré, la hauteur des pics et la profondeur des vallées sont sensiblement du même ordre de grandeur que la hauteur des pics et la profondeur des vallées de la microstructure diffusante, et de préférence sont compris dans les plages de valeurs données en référence à la microstructure diffusante.

Dans un mode de réalisation préféré, les première et deuxième couches couvrent la totalité de la troisième couche. Ce fait permet d'assurer la sécurité contre la falsification des informations lisibles contenues dans ledit produit sécurisé en permettant que les première et deuxième couches protègent l'ensemble des informations lisibles contenues dans le produit sécurisé sans pour autant empêcher ou diminuer la lisibilité de ces informations lisibles.

Selon un autre aspect de la présente invention, ledit objet est rempli par un produit multicouche destiné à la sécurisation d'informations lisibles qui peut être avantageusement utilisé comme produit intermédiaire dans la préparation du produit sécurisé décrit ci-dessus. Comme il va être expliqué ci-après, l'objet d'améliorer la lisibilité des informations lisibles est rempli grâce aux caractéristiques du produit multicouche destinées à être intégrées dans le produit final, c'est-à-dire dans le produit sécurisé.

Le produit multicouche destiné à la sécurisation d'informations lisibles comprend en effet une première couche réfléchissante, un support et une deuxième couche enfermée entre la première couche et le support, dans lequel la première couche et la deuxième couche sont transparentes et au moins une première partie de la face de la deuxième couche opposée au support comprend une microstructure diffusante.

Dans un mode réalisation préféré, le support est détachable de la deuxième couche. De cette manière, le produit sécurisé final obtenu à partir du produit multicouche privé de son support est tel que défini dans la revendication indépendante de produit sécurisé.

Dans un mode de réalisation préféré, le support comprend un substrat et une couche de détachement sur la face interne du substrat. Dans un mode de réalisation, le substrat est un film de polyester, de préférence d'une épaisseur moyenne comprise entre 10 et 50 µm et de préférence entre 15 et 20 µm. Dans un mode de réalisation préféré, la couche de détachement est une couche de cire naturelle ou synthétique, de préférence d'une épaisseur moyenne inférieure à 1 µm.

Dans un mode de réalisation préféré, une deuxième partie de la face de la deuxième couche opposée au support comprend au moins une microstructure diffractante.

Dans un mode de réalisation préféré, le produit multicouche comprend en outre une couche de protection entre la deuxième couche et la couche de détachement du support.

Dans un mode de réalisation préféré, le produit multicouche comprend en outre une couche adhésive sur la face externe de la première couche.

Dans un mode de réalisation préféré, la première couche comprend au moins un composant choisi parmi le sulfure de zinc, le dioxyde de titane, ou l'oxyde de zirconium.

Un autre aspect de la présente invention concerne une méthode de fabrication d'un produit sécurisé comprenant une première couche transparente et réfléchissante, une deuxième couche transparente et une troisième couche incluant des informations lisibles, la méthode comprenant la fourniture d'un produit multicouche tel que décrit ci-dessus, le collage de la troisième couche sur le produit multicouche, et le détachement du support après ledit collage.

La méthode de fabrication d'un produit sécurisé selon l'invention comprend des étapes préférées qui sont exécutées pour obtenir un produit sécurisé selon une ou plusieurs formes de réalisation préférées décrites ci-dessus.

Le collage du produit multicouche et de la troisième couche entre eux peut être réalisé par une quelconque technique adaptée connue de l'homme du métier. Dans un mode de réalisation préféré, le collage est réalisé grâce à un adhésif. Dans un autre mode de réalisation, le collage est un thermosoudage. Selon un mode de réalisation préféré, le thermosoudage comprend un pressage des couches et un soudage thermique.

Un autre aspect de la présente invention concerne une méthode de fabrication d'un produit multicouche destiné à la sécurisation d'informations lisibles comprenant un support, une première couche réfléchissante et transparente et une deuxième couche transparente enfermée entre la première couche et le support, la méthode comprenant le dépôt de la deuxième couche sur le support, la formation d'une microstructure diffusante sur au moins une première partie de la face de la deuxième couche opposée au support et le dépôt de la première couche sur la deuxième couche ainsi pourvue de la microstructure diffusante.

La microstructure diffusante peut être formée sur la deuxième couche par une quelconque technique adaptée connue de l'homme du métier.

Dans un mode de réalisation préféré, la microstructure diffusante est générée par une pluralité de sources de lumière cohérente et est enregistrée lors de l'enregistrement d'une matrice optique. La matrice optique est ensuite convertie par galvanoplastie en une matrice métallique utilisée lors de la formation de la microstructure sur la deuxième couche.

Dans un mode de réalisation particulier, la formation de la microstructure diffusante est effectuée par estampage de la deuxième couche. Dans un mode de réalisation préféré, l'estampage est effectué de manière à former un microrelief sur la face interne de la deuxième couche. Dans la présente demande, le terme "estampage" est utilisé en référence à un procédé de formation comprenant la pression à chaud d'une matrice sur la surface à estamper.

Dans un autre mode de réalisation préféré, la formation de la microstructure diffusante est effectuée par moulage de la deuxième couche. Dans un mode de réalisation préféré, le moulage est effectué de manière à former un microrelief sur la face interne de la deuxième couche. Dans la présente demande, le terme "moulage" est utilisé en référence à un procédé de formation comprenant la pression d'une matrice sur la surface à mouler suivie d'une réticulation de la surface qui permet de fixer la microstructure.

Dans un mode de réalisation préféré, le support comprend un substrat et une couche de détachement, la couche de détachement étant située sur la face interne du substrat.

Dans un mode de réalisation préféré, la méthode comprend en outre le dépôt d'une couche adhésive sur la face externe de la première couche.

Dans un mode de réalisation préféré, la méthode comprend en outre le dépôt d'une couche de protection entre la deuxième couche et le support permettant de protéger le produit sécurisé contre la salissure et la falsification.

Le dépôt des première et deuxième couches et des couches adhésive et de protection peut être réalisé par une quelconque technique adaptée connue de l'homme du métier. Le choix de la technique utilisée pour le dépôt de chacune de ces couches dépend de la composition de chacune desdites couches. Parmi les techniques disponibles, l'homme du métier pourra par exemple choisir un dépôt chimique en phase vapeur, un dépôt physique en phase vapeur, une impression par héliogravure ou encore un dépôt par enduction.

Dans un mode de réalisation préféré, la méthode comprend en outre la formation d'une microstructure diffractante sur au moins une deuxième partie de la face interne de la deuxième couche. Cette microstructure diffractante peut être un hologramme.

Dans un mode de réalisation préféré, la hauteur des pics et la profondeur des vallées compris dans la microstructure diffusante et dans la microstructure diffractante sont sensiblement du même ordre de grandeur. Avantageusement, la microstructure diffusante et la microstructure diffractante peuvent être enregistrées sur une matrice optique unique et ainsi formées simultanément sur la deuxième couche. La formation simultanée de la microstructure diffusante et de la microstructure diffractante permet de résoudre le problème de positionnement des microstructures l'une par rapport à l'autre sur la deuxième couche.

Dans un mode de réalisation préféré, les microstructures diffractante et diffusante sont enregistrées successivement sur une matrice optique unique. Dans un mode de réalisation préféré, la formation de la microstructure diffusante et la formation de la microstructure diffractante sont réalisées simultanément.

Dans un mode de réalisation préféré, la matrice comprend un matériau photosensible. Dans un mode de réalisation préféré, la microstructure diffusante est générée par une pluralité de sources de lumière cohérentes. Dans un mode de réalisation préféré, la microstructure diffractante est générée par un nombre limité de sources de lumières, de préférence 2. Une fois les deux microstructures enregistrées, la matrice optique est convertie par galvanoplastie en une matrice métallique utilisée lors de la formation des microstructures sur la deuxième couche.

Dans un mode de réalisation préféré, les méthodes telles que décrites ci-dessus sont mises en oeuvre de manière continue, sans point de stockage intermédiaires entre les différentes étapes des méthodes, par exemple en traitant des longueurs indéfinies de matières premières, par exemple stockées en bobines.

Avantageusement, l'ajout d'une microstructure diffusante dans la deuxième couche du produit sécurisé permet d'obtenir un produit sécurisé dont les informations lisibles peuvent être lues correctement à l'oeil nu ou par une machine.

### BRÈVE DESCRIPTION DES DESSINS

L'invention va maintenant être décrite en référence aux dessins annexés dans lesquels les Figures ne sont pas à l'échelle et les dimensions de certains éléments sont agrandies à des fins illustratives, et dans lesquels
- la Figure 1 représente une vue de dessus d'un produit sécurisé selon un mode de réalisation de la présente invention,
- la Figure 2 représente une vue en coupe transversale du produit sécurisé de la Figure 1,
- la Figure 3 représente une vue en coupe transversale d'un produit intermédiaire pendant une phase de la production du produit sécurisé de la Figure 1.

### DESCRIPTION DÉTAILLÉE DE MODES DE REALISATION PRÉFÉRÉS

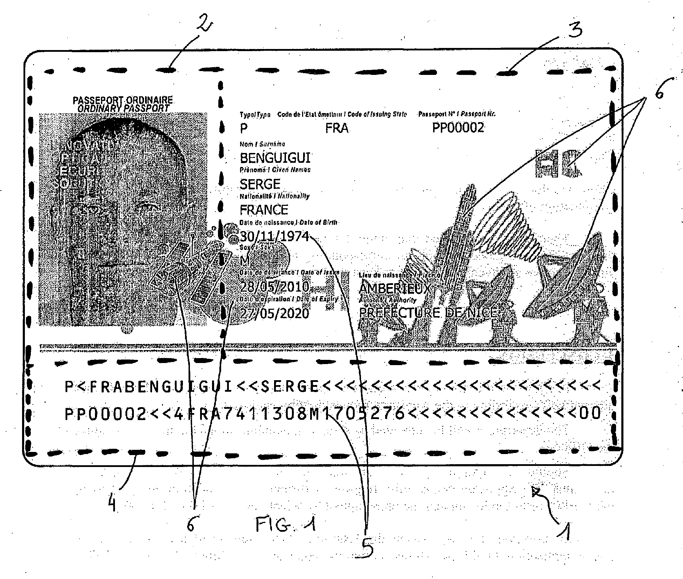

La Figure 1 illustre un produit sécurisé 1, par exemple une page d'un passeport, dans une vue de dessus.

Le produit sécurisé 1 comprend une zone pour une photo 2, et deux zones de lecture 3, 4. Ces zones de lecture sont une première zone de lecture à l'oeil nu 3 comprenant des informations lisibles 5 telles que les données biographiques du titulaire du produit sécurisé et une zone destinée à la lecture par machine 4 comprenant d'autres informations lisibles 5 telles que le nom du titulaire et des caractères d'authentification du produit sécurisé.

Le produit sécurisé 1 comprend en outre des éléments de sécurité tels que des hologrammes 6 ou que des traits et éléments imprimés (non représentés).

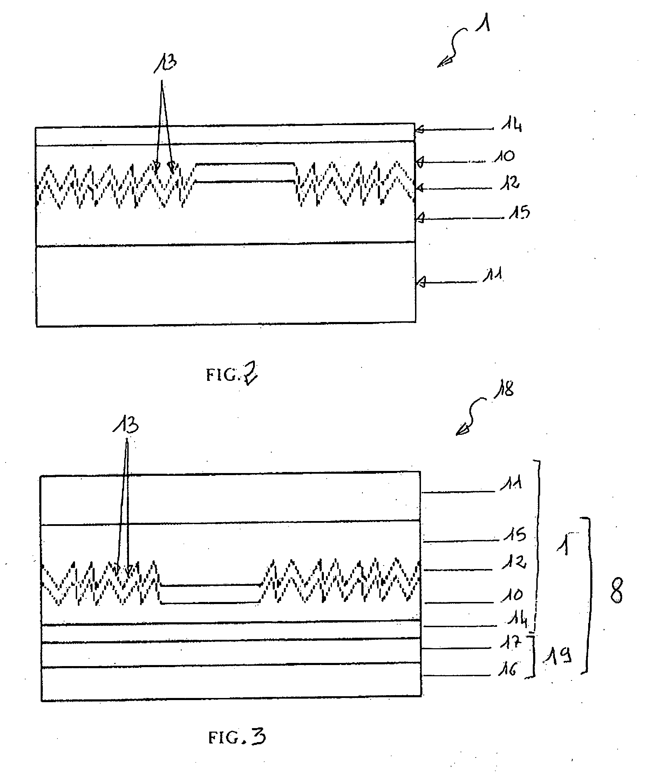

La Figure 2 illustre le produit sécurisé 1 dans une vue en coupe transversale.

Le produit sécurisé 1 comprend une première couche 12 réfléchissante et transparente, une deuxième couche 10 transparente et une troisième couche 11 incluant des informations lisibles. La première couche 12 est enfermée entre les deuxième et troisième couches 10, 11. La première couche 12 est en sulfure de zinc. La deuxième couche 10 est une couche de vernis acrylique. La troisième couche 11 est en papier. L'épaisseur moyenne de la première couche 12 est comprise entre 20 et 140 nm. La deuxième couche 10 a une épaisseur moyenne comprise entre 1 et 25 µm. La troisième couche 11 a une épaisseur moyenne de 110 µm. Le produit sécurisé 1 comprend en outre une microstructure diffusante 13 sur la face interne de la deuxième couche 10. La microstructure 13 est positionnée afin de couvrir la zone de lecture par machine 4. La microstructure diffusante 13 comprend une pluralité de pics de hauteurs différentes répartis de manière irrégulière, stochastique. La rugosité de la microstructure diffusante est de 130±30 nm.

Le produit sécurisé 1 comprend en outre une couche de protection 14 et une couche adhésive 15. La couche de protection 14 est positionnée sur la deuxième couche 10. La couche adhésive est enfermée entre les première et troisième couches 11, 12.

La méthode de fabrication du produit sécurisé 1 est décrite en référence à la Figure 3. Dans cette Figure, un support 19 est illustré comprenant un substrat 16 et une couche de détachement 17 située sur la face interne du substrat 16. La couche de détachement 17 est déposée par enduction sur le substrat 16. Puis la couche de protection 14 et la deuxième couche 10 sont déposées par enduction sur la couche de détachement 17. La deuxième couche 10 est estampée de manière à former la microstructure 13 sur une première partie de sa face interne. La première couche 12 est déposée 10 par évaporation sous vide sur la deuxième couche. La couche adhésive 15 est ensuite déposée par enduction sur la première couche 12. De cette manière, un produit multicouche 8 est obtenu.

A ce niveau là, la troisième couche 11 est collée sur la couche adhésive 15. Enfin, un produit intermédiaire 18 est formé par collage du produit multicouche 8 et de la troisième couche 11. Les première et troisième couches 11, 12 sont soudées entre elles grâce à la couche adhésive 15, tandis que la deuxième couche 10 et la couche de protection 14 sont solidarisées par interpénétration surfacique des polymères réalisée au moment de l'enduction. Enfin le substrat 16 et la couche de détachement 17 sont détachés du produit sécurisé 1.

L'invention ainsi décrite présente entre autre l'avantage suivant.

Les produits sécurisés selon l'invention permettent d'assurer la lisibilité à l'oeil nu ou par une machine des informations lisibles contenues dans les produits sécurisés, notamment dans la ou les zones de lecture.

L'invention a été décrite dans des exemples particuliers de réalisation illustrés par les différentes figures qui ne sont pas limitants. Des formes de réalisation supplémentaires peuvent être envisagées par l'homme du métier comme par exemples, le choix des matériaux, des techniques de dépôts des différentes couches, de la technique de formation de la microstructure diffusante.

## Revendications

1. Produit multicouche (8) destiné au collage sur une zone de lecture par machine (4) d'un produit incluant des informations lisibles (5) et à la sécurisation desdites informations lisibles (5), le produit multicouche (8) comprenant une première couche (12) réfléchissante, un support (19) et une deuxième couche (10) enfermée entre la première couche (12) et le support (19), dans lequel :
- la première et la deuxième couches (12, 10) sont transparentes; et
- au moins une première partie de la face de la deuxième couche (10) opposée au support (19) comprend une microstructure (13) diffusante.

2. Produit multicouche (8) selon la revendication 1, dans lequel le support (19) est détachable de la deuxième couche (10).

3. Produit multicouche (8) selon l'une quelconque des revendications précédentes, dans lequel une deuxième partie de la face de la deuxième couche (10) opposée au support (19) comprend au moins une microstructure diffractante.

4. Produit multicouche (8) selon l'une quelconque des revendications précédentes, dans lequel la première couche (12) comprend au moins un composant choisi parmi le sulfure de zinc ou le dioxyde de titane.

5. Produit sécurisé (1) comprenant une première couche (12) réfléchissante, une deuxième couche (10), une troisième couche (11) incluant une zone de lecture par machine (4) incluant des informations lisibles (5) et une couche adhésive (15), la première couche (12) étant enfermée entre la deuxième et la troisième couches (10, 11) et la couche adhésive (15) étant enfermée entre la première et la troisième couches (12, 11), dans lequel:
- la première et la deuxième couches (10, 12) sont transparentes;
- au moins une première partie de la face interne de la deuxième couche (10) comprend une microstructure (13) diffusante; et
- la microstructure (13) diffusante est positionnée de manière à couvrir une partie prédéterminée des informations lisibles (5) de la zone de lecture par machine (4).

6. Produit sécurisé (1) selon la revendication 5, dans lequel la microstructure (13) diffusante crée un gradient d'indice de réfraction à l'interface des première et deuxième couches (12, 10).

7. Produit sécurisé (1) selon la revendication 5 ou la revendication 6, dans lequel la troisième couche (11) comprend du papier.

8. Produit sécurisé (1) selon l'une quelconque des revendications 5 à 7, dans lequel la première couche (12) comprend au moins un composant choisi parmi le sulfure de zinc ou le dioxyde de titane.

9. Produit sécurisé (1) selon l'une quelconque des revendications 5 à 8, dans lequel une deuxième partie de la face interne de la deuxième couche (10) comprend au moins une microstructure diffractante.

10. Méthode de fabrication d'un produit multicouche (8) destiné au collage sur une zone de lecture par machine (4) d'un produit incluant des informations lisibles (5) et à la sécurisation desdites informations lisibles (5), le produit multicouche (8) comprenant une première couche (12) réfléchissante transparente, un support (19) et une deuxième couche (10) transparente enfermée entre la première couche (12) et le support (19), la méthode comprenant:
- le dépôt de la deuxième couche (10) sur le support (19);
- la formation d'une microstructure (13) diffusante sur au moins une première partie de la face de la deuxième couche (10) opposée au support (19); et
- le dépôt de la première couche (12) sur la deuxième couche (10) ainsi pourvue de la microstructure (13) diffusante.

11. Méthode selon la revendication 10, dans laquelle la formation de la microstructure (13) diffusante est effectuée par estampage de la deuxième couche (10).

12. Méthode selon la revendication 10 ou la revendication 11, comprenant en outre la formation d'une microstructure diffractante sur au moins une deuxième partie de la face de la deuxième couche (10) opposée au support (19).

13. Méthode de fabrication d'un produit sécurisé (1) comprenant une première couche (12) réfléchissante transparente, une deuxième couche (10) transparente, une troisième couche (11) incluant une zone de lecture par machine (4) incluant des informations lisibles (5) et une couche adhésive (15), la méthode comprenant:
- la fourniture d'un produit multicouche (8) selon l'une quelconque des revendications 1 à 4;
- le collage de la troisième couche (11) sur le produit multicouche (8) ; et
- le détachement du support après ledit collage ;
dans lequel la couche adhésive (15) est enfermée entre la première et la troisième couches (12, 11).

## Patentansprüche

1. Mehrschichtiges Produkt (8) zum Kleben eines lesbare Informationen (5) umfassenden Produktes auf eine Maschinenlesezone (4) und zur Sicherung der lesbaren Informationen (5), wobei das mehrschichtige Produkt (8) eine erste reflektierende Schicht (12), einen Träger (19) und eine zweite Schicht (10) umfasst, die zwischen der ersten Schicht (12) und dem Träger (19) eingeschlossen ist, wobei:
- die erste und die zweite Schicht (12, 10) transparent sind, und
- mindestens ein erster Teil der dem Träger (19) gegenüberliegenden Seite der zweiten Schicht (10) eine Diffusionsmikrostruktur (13) umfasst.

2. Mehrschichtiges Produkt (8) nach Anspruch 1, bei dem der Träger (19) von der zweiten Schicht (10) ablösbar ist.

3. Mehrschichtiges Produkt (8) nach einem der vorhergehenden Ansprüche, bei dem ein zweiter Teil der dem Träger (19) gegenüberliegenden Seite der zweiten Schicht (10) mindestens eine Diffraktionsmikrostruktur umfasst.

4. Mehrschichtiges Produkt (8) nach einem der vorhergehenden Ansprüche, bei dem die erste Schicht (12) mindestens eine Komponente umfasst, die unter Zinksulfid oder Titandioxid ausgewählt ist.

5. Gesichertes Produkt (1), umfassend eine erste reflektierende Schicht (12), eine zweite Schicht (10), eine dritte Schicht (11), die eine Maschinenlesezone (4) mit lesbaren Informationen (5) einschließt, und eine Haftschicht (15), wobei die erste Schicht (12) zwischen der zweiten und der dritten Schicht (10, 11) eingeschlossen ist, und die Haftschicht (15) zwischen der ersten und der dritten Schicht (12, 11) eingeschlossen ist, wobei:
- die erste und die zweite Schicht (10, 12) transparent sind,
- mindestens ein erster Teil der Innenseite der zweiten Schicht (10) eine Diffusionsmikrostruktur (13) umfasst; und
- die Diffusionsmikrostruktur (13) derart positioniert ist, dass sie einen vorbestimmten Teil der lesbaren Informationen (5) der Maschinenlesezone (4) abdeckt.

6. Gesichertes Produkt (1) nach Anspruch 5, bei dem die Diffusionsmikrostruktur (13) einen Brechnungsindexgradienten an der Grenzfläche der ersten und zweiten Schicht (12, 10) erzeugt.

7. Gesichertes Produkt (1) nach Anspruch 5 oder 6, bei dem die dritte Schicht (11) Papier umfasst.

8. Gesichertes Produkt (1) nach einem der Ansprüche 5 bis 7, bei dem die erste Schicht (12) mindestens eine Komponente umfasst, die unter Zinksulfid oder Titandioxid ausgewählt ist.

9. Gesichertes Produkt (1) nach einem der Ansprüche 5 bis 8, bei dem ein zweiter Teil der Innenseite der zweiten Schicht (10) mindestens eine Diffraktionsmikrostruktur umfasst.

10. Verfahren zur Herstellung eines mehrschichtigen Produkts (8) zum Kleben eines lesbare Informationen umfassenden Produktes auf eine Maschinenlesezone (4) und zur Sicherung der lesbaren Informationen (5), wobei das mehrschichtige Produkt (8) eine erste transparente reflektierende Schicht (12), einen Träger (19) und eine zweite transparente Schicht (10) umfasst, die zwischen der ersten Schicht (12) und dem Träger (19) eingeschlossen ist, wobei die Methode umfasst:
- Aufbringen der zweiten Schicht (10) auf den Träger (19);
- Bilden einer Diffusionsmikrostruktur (13) auf mindestens einem ersten Teil der dem Träger (19) gegenüberliegenden Seite der zweiten Schicht (10); und
- Aufbringen der ersten Schicht (12) auf die zweite Schicht (10) zum Versehen mit der Diffusionsmikrostruktur (13).

11. Methode nach Anspruch 10, bei der die Bildung der Diffusionsmikrostruktur (13) durch Prägen der zweiten Schicht (10) erfolgt.

12. Methode nach Anspruch 10 oder 11, ferner umfassend die Bildung einer Diffraktionsmikrostruktur auf mindestens einem zweiten Teil der dem Träger (19) gegenüberliegenden Seite der zweiten Schicht (10).

13. Methode zur Herstellung eines gesicherten Produkts (1), umfassend eine erste transparente reflektierende Schicht (12), eine zweite transparente Schicht (10), eine dritte Schicht (11), die eine Maschinenlesezone (4) mit lesbaren Informationen (5) einschließt, und eine Haftschicht (15), wobei die Methode umfasst:
- Bereitstellung eines mehrschichtigen Produktes (8) nach einem der Ansprüche 1 bis 4;
- Kleben der dritten Schicht (11) auf das mehrschichtige Produkt (8); und
- Ablösen des Trägers nach dem Kleben;
bei der die Haftschicht (15) zwischen der ersten und der dritten Schicht (12, 11) eingeschlossen ist.

## Claims

1. A multilayer product (8) intended to be bonded to a machine-readable zone (4) of a product including readable information (5) and for securing said readable information (5), the multilayer product (8) comprising a first reflective layer (12), a carrier (19) and a second layer (10) enclosed between the first layer (12) and the carrier (19), in which:
- the first and the second layers (12, 10) are transparent; and
- at least a first part of the surface of the second layer (10) opposite the carrier (19) comprises a scattering microstructure (13).

2. The multilayer product (8) as claimed in claim 1, in which the carrier (19) is detachable from the second layer (10).

3. The multilayer product (8) as claimed in any one of the preceding claims, in which a second part of the surface of the second layer (10) opposite the carrier (19) comprises at least one diffractive microstructure.

4. The multilayer product (8) as claimed in any one of the preceding claims, in which the first layer (12) comprises at least one component chosen from zinc sulfide or titanium dioxide.

5. A secure product (1) comprising a first reflective layer (12), a second layer (10), a third layer (11) including a machine-readable zone (4) including readable information (5) and an adhesive layer (15), the first layer (12) being enclosed between the second and the third layers (10, 11) and the adhesive layer (15) being enclosed between the first and the third layers (12, 11), in which:
- the first and second layers (10, 12) are transparent;
- at least a first part of the internal surface of the second layer (10) comprises a scattering microstructure (13); and
- the scattering microstructure (13) is positioned so as to cover a predetermined part of the readable information (5) of the machine-readable zone (4).

6. The secure product (1) as claimed in claim 5, in which the scattering microstructure (13) creates a refractive index gradient at the interface of the first and second layers (12, 10).

7. The secure product (1) as claimed in claim 5 or claim 6, in which the third layer (11) comprises paper.

8. The secure product (1) as claimed in any one of claims 5 to 7, in which the first layer (12) comprises at least one component chosen from zinc sulfide or titanium dioxide.

9. The secure product (1) as claimed in any one of claims 5 to 8, in which a second part of the internal surface of the second layer (10) comprises at least one diffractive microstructure.

10. A method for producing a multilayer product (8) intended to be bonded to a machine-readable zone (4) of a product including readable information (5) and for securing said readable information (5), the multilayer product (8) comprising a first reflective transparent layer (12), a carrier (19) and a second transparent layer (10) enclosed between the first layer (12) and the carrier (19), the method comprising:
- the deposition of the second layer (10) onto the carrier (19);
- the formation of a scattering microstructure (13) on at least a first part of the surface of the second layer (10) opposite the carrier (19); and
- the deposition of the first layer (12) onto the second layer (10) thus provided with the scattering microstructure (13).

11. The method as claimed in claim 10, in which the formation of the scattering microstructure (13) is carried out by stamping of the second layer (10).

12. The method as claimed in claim 10 or claim 11, further comprising the formation of a diffractive microstructure on at least a second part of the surface of the second layer (10) opposite the carrier (19).

13. A method for producing a secure product (1), comprising a first reflective transparent layer (12), a second transparent layer (10), a third layer (11) including a machine-readable zone (4) including readable information (5) and an adhesive layer (15), the method comprising:
- the provision of a multilayer product (8) as claimed in any one of claims 1 to 4;
- the bonding of the third layer (11) onto the multilayer product (8); and
- the detachment of the carrier following said bonding;
wherein the adhesive layer (15) is enclosed between the first and the third layers (12, 11).
